Europäisches Patentamt

European Patent Office

Office européen des brevets

(11) Veröffentlichungsnummer: **0 075 097**

**B2**

(12) NEUE EUROPÄISCHE PATENTSCHRIFT

(45) Veröffentlichungstag der neuen Patentschrift:
25.04.90

(51) Int. Cl.⁵: **B 60 T 17/02**

(21) Anmeldenummer: 82107210.5

(22) Anmeldetag: 10.09.82

(54) **Einrichtung zur Erzeugung von Druckgas.**

(30) Priorität: 17.09.81 DE 3136948

(43) Veröffentlichungstag der Anmeldung:
30.03.83 Patentblatt 83/13

(45) Bekanntmachung des Hinweises auf die
Patenterteilung:
30.07.86 Patenblatt 86/31

(45) Bekanntmachung des Hinweises auf die
Entscheidung über den Einspruch:
25.04.90 Patentblatt 90/17

(84) Benannte Vertragsstaaten:
AT CH DE FR GB IT LI SE

(56) Entgegenhaltungen:
DE-A-2 615 627
DE-A-2 920 685
DE-B-2 726 494

Firmendruckschrift: BENDIX-WESTINGHOUSE
Instruction & Service Data, Nr. SD-36 Rev.
7/18/68, bzw. SD-36 7/21/61, "TYPE D-2
GOVERNOR", Seiten 1 bis 3

(73) Patentinhaber: WABCO Westinghouse
Fahrzeugbremsen GmbH
Am Lindener Hafen 21 Postfach 91 12 80
D-3000 Hannover 91 (DE)

(72) Erfinder: Heger, Werner
Burgdorfer Kirchweg 27
D-3160 Lehrte/Kolshorn (DE)
Erfinder: Kaltenthaler, Wolfgang
Töpferweg 19
D-3015 Wennigsen (DE)
Erfinder: Wilke, Helmut
Am Tongrund 2
D-3015 Wennigsen 5 (DE)

(74) Vertreter: Schrödter, Manfred
WABCO Westinghouse Fahrzeugbremsen
GmbH Am Lindener Hafen 21 Postfach 91 12 80
D-3000 Hannover 91 (DE)

EP 0 075 097 B2

Courier Press, Leamington Spa, England.

## Beschreibung

Die Erfindung betrifft eine Einrichtung zur Erzeugung von Druckgas, insbesondere für eine Druckluft-Bremsanlage, gemäß dem Obergriff des Patentanspruchs 1.

Eine solche Einrichtung ist im Zusammenhang mit einer Druckluft-Bremsanlage durch das Instruktionsblatt SD—36 REV. 7/18/68 der Fa. Bendix-Westinghouse bekannt. Bei dieser bekannten Einrichtung wird ein in der Druckleitung angeordnetes auch als Governor bekanntes Umschaltventil verwendet, dessen pneumatischer Steuerausgang mit einem pneumatischen Steueranschluß des Verdichters zur Öffnung des Saugventils in der Leerlaufphase des Verdichters verbunden ist. In der Leerlaufphase beaufschlagt der dem pneumatischen Steueranschluß des Verdichters zugeführte Druck der Verbrauchers einen Schaltkolben zur Öffnung des Saugventils.

Bei dieser Abschalttechnik wird zwar die Antriebsleistung des Verdichters weitgehend ausgeschaltet, da das Saugventil in der Leerlaufphase des Verdichters offen gehalten wird. Es entstehen jedoch relativ hohe Temperaturen, da kein Luftaustausch stattfindet und die heiße Luft durch die Kolbenbewegungen zwischen dem Saugram und dem Verdichtungsraum hin- und herströmt und sich dabei immer merh aufheizt. Der nicht vorhandene Luftaustasch der sich hin- und herbewegenden Luft führt zu einer relativ langen Verwildauer des nicht erwünschten Öles aus dem Kurbelgehäuse im Saug- und Verdichtungsraum, was infolge hohen Temperaturen zu Ölkohlebildungen führt.

Durch die DE—A—2 615 627 ist ebenfalls eine gattungsgemäße Einrichtung bekannt, mit der das Druckventil in der Leerlaufphase des Verdichters zur Reduzierung des Staudruckes offen gehalten wird. Über das Saugventil und das offen gehaltene Druckventil findet ein Luftaustausch zur Druckseite des Verdichters hin statt. Während des Saughubes gelangt hierbi druckseitig erwärmte Luft in den Verdichtungsraum, was sich nachteilig auf die Wärmeabfuhr auswirkt.

Der Erfindung liegt deshalb die Aufgabe zugrunde, eine Einrichtung der eingangs genannten Art zu schaffen, bei der gegenüber den vorstehend genannten Einrichtungen eine größere Reduzierung des Staudruckes und eine verbesserte Wärmeableitung in der Leerlaufphase des Verdichters errreicht wird.

Diese Aufgabe wird durch die im Patentanspruche 1 angegebene Erfindung gelöst. Weiterbildungen und vorteilhafte Ausführungsformen der Erfindung sind in den Unteransprüchen angegeben.

Bei der erfindungsgemäßen Einrichtung wird die bereits bekannte Druckregelung mittles eines Governors — Öffnung des Saugventils — mit der erfindungsgemäßen Druckregelung — Öffnung des Druckventils — kombiniert, so daß die durch die Offenstellung des Druckventils erzielte Reduzierung des Staudruckes durch das gleichzeitig offene Saugventil noch weiter reduziert wird.

Die Erfindung wird anhand von Ausführungsbeispielen, die in der Zeichnung dargestellt sind, näher erläutert.

Es zeigen:

Fig. 1 eine Teildarstellung einer Drucklufterzeugungseinrichtung mit Governor-Druckregelung, wobei der Governor über zwei Steuerausgänge für die Öffnung des Druck- und des Saugventils verfügt;

Fig. 2, 3, 4 weitere Ausführungsbeispiele für die Mittel zur Öffnung des Druckventils.

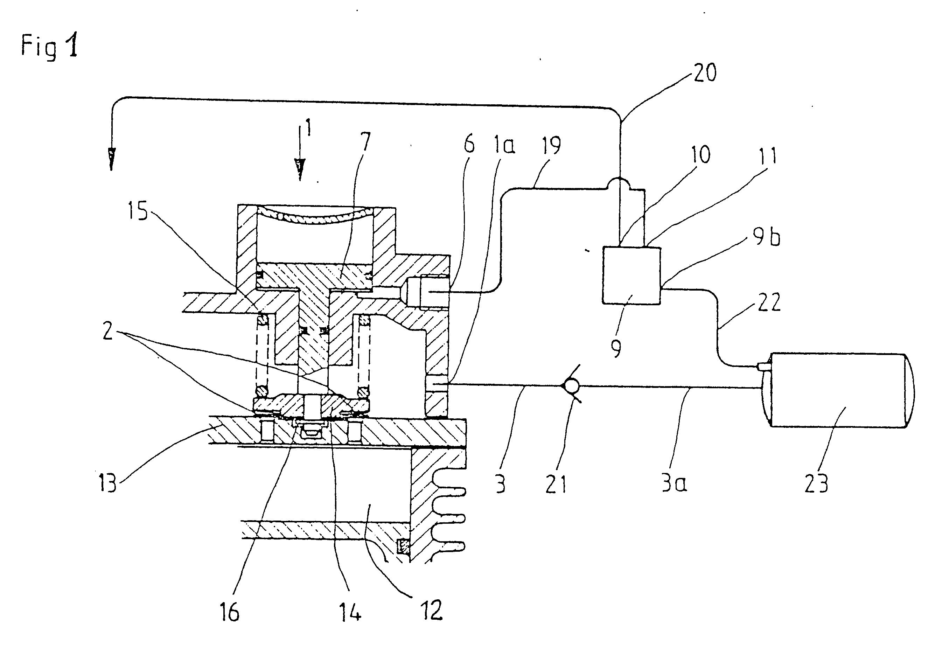

Gemäß Fig. 1 besteht die Drucklufterzeugungseinrichtung aus einem Verdichter 1 und aus einer als sog. Governor bekannten Druckregeleinrichtung 9. Der Verdichter 1 ist mit seinem als Druckluftausgang dienenden Anschluß 1a über eine Druckleitung 3, 3a mit dem Vorratsbehälter 23 verbunden. In die Druckleitung 3, 3a ist ein zum Verbraucher hin öffnendes Rückschlagventil 21 geschaltet.

Über einen pneumatischen Steueranschluß 6 des Verdichters 1 ist ein Kolben 7 über eine Steuerleitung 19 und einen ersten Steuerausgang 11 des Governors 9 von der Druckluft des Verbrauchers beaufschlagbar, so daß in der Leerlaufphase des Verdichters eine Verbindung dieser Steuerleitung 19 mit der Druckluftanlage des Verbrauchers hergestellt ist. Diese Verbindung besteht mit dem Vorratsbehälter 23 über eine Leitung 22.

Der Kolben 7 steht im Eingriff mit dem den nicht näher bezeichneten Verdichtungsraum 12 des Verdichters mit dem Druckanschluß la verbindenden Druckventil 2 des Verdichters 1 in der Weise, daß in Schaltstellung des Kolbens 7 infolge Beaufschlagung mit Druckluft, das Druckventil 2 geöffnet ist.

In den dargestellten Ausführungsbeispielen ist eine Druckventillamelle 2 des Druckventils zwischen einer Ventilträgerplatte 13 und einem Ventilfänger 14 angeordnet. Der Kolben 7 ist dabei mit der Ventilflänger 14 verbunden, wobei der Ventilflänger 14 mit einem Mitnehmer 16 versehen ist, welcher durch seine Lage unterhalb der Druckventillamelle 2 diese bei einer Hubbewegung des Kolbens 7 und des Ventilfängers 14 von seinem geschlossenen Sitz auf der Ventilträgerplatte 13 abhebt.

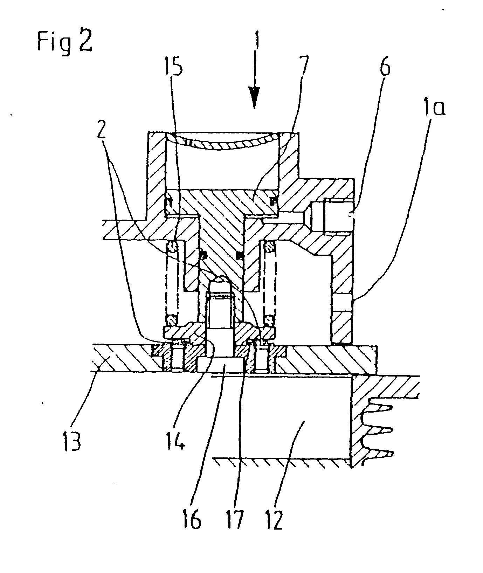

Bei dem Ausführungsbeispiel gemäß Fig. 2 wird bei der Hubbewegung des Kolbens 7 und der damit einhergehenden Abhebebewegung der Druckventillamelle 2 nicht nur die Druckventilbohrung geöffnet, sondern gleichzeitig ein Teil 17 des die Drucklamelle 2 abstützenden Bereiches der Ventilträgerplatte 13 abgehoben, so daß in vorteilhafter Weise eine gegenüber der von der Drucklamelle 2 freigegebenen Ventilöffnung größere Öffnung freigegeben wird.

In dem Ausführungsbeispiel gemäß 1 ist der Governor 9 in bekannter Weise über einen zweiten Steuerausgang 10 über eine Steuerleitung 20 mit einem zweiten pneumatischen nicht dargestellten Steueranschluß des Verdichters zur Öffnung des Saugventils verbunden. Die beiden pneumatischen Steuerausgänge 10, 11 können auch von einem gemeinsamen Steuerausgang des Governors 9 gebildet werden.

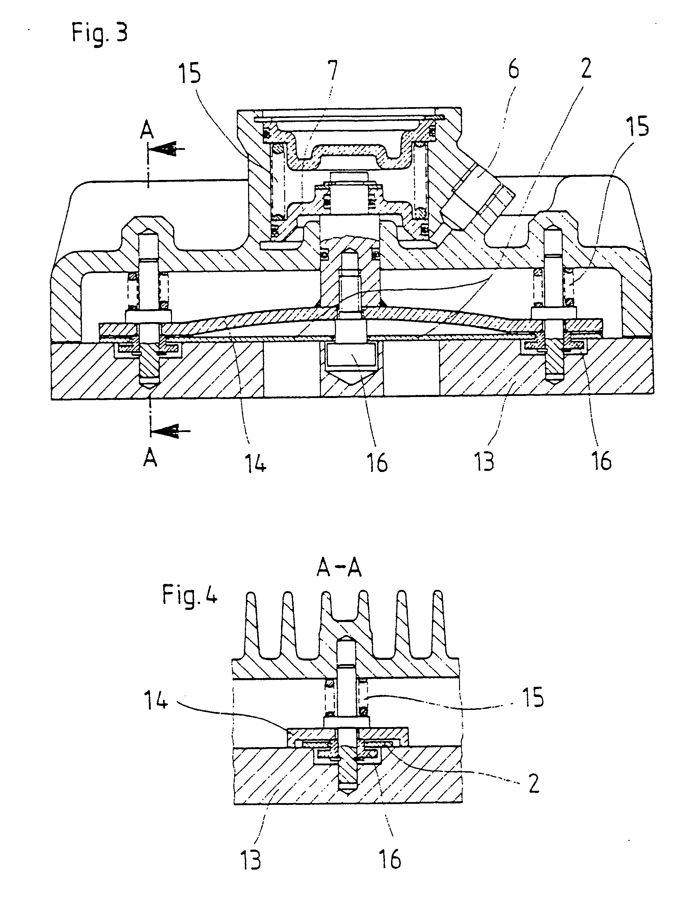

In den Ausführungsbeispielen gemäß Fig. 3 und 4 kann die Verbindung des Ventilfängers 14 mit den unterhalb der Drucklamelle 2 angreifenden Mitnehmer 16 wahlweise sowohl an dem Ende des Ventilkörpers 14 bzw. der Drucklamelle 2 (Fig. 4), als auch in der Mitte direkt unterhalb des Kolbens 7 erfolgen (Fig. 3).

Die Spannung einer oberhalb des Kolbens 7 angeordneten, sich am Zylinderkopfgehäuse abstützenden Feder 15 ist so ausgelegt, daß sich der Ventilfänger 14 während der Förderphase nicht vom Druck der komprimierten Luft bewegen läßt.

Die Funktion der Drucklufterzeugereinrichtung ist wie folgt:

Die vom Luftpresser 1 erzeugte Druckluft gelangt gemäß Fig. 1 über den Druckanschluß 1a und die Druckleitung 3, 3a in den Vorratsbehälter 23. Der Governor 9 schaltet bei Erreichen einer eingestellten Druckhöhe in der Weise um, daß der Druckluftbehälter 23 über die Leitung 22 und den Steuereingang 9b mit dem ersten Steuerausgang 11 und dem zweiten Steuerausgang 10 verbunden ist.

Die am ersten Steuerausgang 11 anstehende Druckluft des Verbrauchers gelangt über die Steuerleitung 19 und den Steueranschluß 6 auf den Kolben 7 des Luftpressers 1. Die dadurch verursachte Hubbewegung des Kolbens 7 hebt den Ventilfänger 14 zusammen mit dem unterhalb der Drucklamelle 2 angeordneten Mitnehmer 16 gegen die Spannung der Feder 15 an, so daß das Druckventil 2 geöffnet ist.

Die am zweiten Steuerausgang 10 anstehende Druckluft des Verbrauchers gelangt über die Steuerleitung 20 zu dem zweiten pneumatischen Steueranschluß des Verdichters zum Öffnen des Saugventils.

Im Ausführungsbeispiel gemäß Fig. 2 wird gleichzeitig ein mit dem Mitnehmer 16 verbundenes Teil 17 der Ventilträgerplatte 13 angehoben, so daß der Querschnitt der Druckventilbohrung erheblich vergrößert ist. Der Staudruck am Druckventil wird durch diese Vergrößerung in vorteilhafter Weise verringert.

Bei einem bestimmten Druckabfall infolge Druckluftverbrauchs durch ven Verbraucher schaltet der Governor 9 wieder auf Förderbetrieb um. Bei Einsatz des Governors ist die Druckleitung 3 nicht zur Atmosphäre hin entlüftet. Bei offenem außer Funktion gesetzten Druckventil ist der Druckraum des Verdichters und das Leistungsvolumen bis zum Rückschlagventil 21 mit dem Verdichtungsraum des Verdichters während des Saug- und Verdichtungshubes verbunden. Dieses Volumen hat somit die Wirkung eines Istraumvolumens und bewirkt, daß sich der Druck des Verdichters bei einem niedrigen Druckniveau stabilisiert, d.h. die Förderung des Verdichters unterbrochen ist.

Das in Fig. 1 dargestellte Ausführungsbeispiel veranschaulicht eine optimale Lösung der an die Erfindung gestellten Aufgabe. Hier wird die bereits bekannte Druckregelung mittels eines Governors — Öffnung des Saugventils — mit der erfindungsgemäßen Druckregelung — Öffnung des Druckventils — kombiniert, so daß die durch die Offenstellung des Druckventils erzielte Reduzierung des Staudruckes durch das gleichzeitig offene Saugventil noch weiter reduziert wird.

Die in der Beschreibung erwähnte Drucklamelle des Druckventils kann sowohl aus einem Metallplättchen als auch aus einem anderen elastischen Material bestehen. Ein Beispiel mit einer elastischen Drucklamelle stellen die Fig. 3 und 4 dar.

## Patentansprüche

1. Einrichtung zur Erzeugung von Druckgas, insbesondere für eine Druckluftbremsanlage, die folgende Merkmale umfaßt:

a) Est ist ein Verdichter (1) mit einem Verdichtungsraum (12) vorgesehen, der über ein Saugventil das zu komprimierende Gas ansaugt und einen Druckgasausgang (1a) aufweist;

(b) der Verdichtungsraum (12) des Verdichters (1) ist mit dem Druckgasausgang (1a) über ein Druckventil (2) verbunden;

c) der Druckgasausgang (1a) ist über eine Druckleitung (3, 3a) mit einem, insbesondere als Vorratsbehälter (23) ausgebildeten, Verbraucher verbunden;

d) es ist eine Druckregeleinrichtung (9) vorgesehen, die bei Erreichen eines vorgegebenen Druckes den Verdichter (1) von einer Förderphase in eine Leerlaufphase umschaltet;

e) der Verdichter (1) ist mit einem ersten pneumatischen Steueranschluß (6) zur Öffnung des Druckventils (2) versehen;

f) der erste pneumatische Steueranschluß (6) des Verdichters (1) ist mit einem ersten pneumatischen Steuerausgang (11) der Druckregeleinrichtung (9) verbunden;

g) zum Öffnen des Druckventils (2) ist im Verdichter (1) ein Schaltkolben (7) vorgesehen, der mit dem dem ersten pneumatischen Steueranschluß (6) zugeführten Druck schaltbar ist,

h) die Druckregeleinrichtung (9) weist einen pneumatischen Steuereingang (9b) auf, der mit der Druckgasanlage des Verbrauchers (23) verbunden ist;
gekennzeichnet durch folgende Merkmale:

i) Der Verdichter (1) ist mit einem zweiten pneumatischen Steueranschluß zum Öffnen des Saugventils versehen;

j) der zweite pneumatische Steueranschluß des Verdichters (1) ist mit einem zweiten pneumatischen Steuerausgang (10) der Druckregeleinrichtung (9) verbunden;

2. Einrichtung nach Anspruch 1, dadurch gekennzeichnet, daß die Druckregeleinrichtung (9) aus einem in Abhängigkeit vom Druck des dem Verbraucher (23) zugeführten Drukgases steuerbaren Umschaltventil (9) besteht, durch das der erste pneumatische Steueranschluß (6) zur Öffnung des Druckventils (2) und der zweite Steueranschluß zur Öffnung des Saugventils des Verdichters (1) mit der Druckgasanlage des Verbrauchers (Vorratsbehälter 23) verbindbar ist.

3. Einrichtung nach den Ansprüchen 1 und 2, dadurch gekennzeichnet, daß für den ersten und zweiten pneumatischen Steuerausgang (11 und 10) der Druckregeleinrichtung (9) ein gemeinsamer pneumatischer Steuerausgang der Druckregeleinrichtung (9) vorgesehen ist.

4. Einrichtung nach den Ansprüchen 1, 2 und 3, gekennzeichnet durch folgende Merkmale:

a) Der Verdichter (1) weiste eine Ventilträgerplatte (13) auf, die so ausgebildet ist, daß wenigstens ein Teil (17) des die Drucklamelle des Druckventils (2) abstützenden Bereiches der Ventilträgerplatte (13) in Öffnungsrichtung der Drucklamelle derart bewegbar ist, daß eine gegenüber der von der Drucklamelle freigegebenen Ventiloffnung größere Öffnung für das komprimierte Gas freigebbar ist;

b) der zum Öffnen des Druckventils (2) vorgesehene Schaltkolben (7) ist so angeordnet, daß er zur Bewegung des bewegbaren Teiles (17) der Ventilträgerplatte (13) dient.

## Revendications

1. Dispositif pour la production de gaz comprimé, en particulier pour en équipement de freinage pneumatique, présentant les particularités suivantes:

a) un compresseur (1) avec un chambre de compression (12) aspire le gaz à comprimer par un clapet d'aspiration et comprend une sortie de gas comprimé (1a);

b) la chambre de compression (12) du compresseur (1) est reliée à la sortie de gaz comprimé (1a) par un clapet de refoulement (2);

c) la sortie du gaz comprimé (1a) est reliée par une canalisation de refoulement (3, 3a) à un récepteur réalisé en particulier sous forme d'un réservoir (23);

d) un dispositif de régulation de pression (9) commute le compresseur d'une phase de débit sur une phase de marche à vide quand une pression prédéterminée est atteinte;

e) le compresseur (1) comporte un premier raccord de commande pneumatique (6) pour l'ouverture du clapet de refoulement (2);

f) le premier raccord de commande pneumatique (6) du compresseur (1) est relié à une première sortie de commande pneumatique (11) du dispositif de régulation de pression (9);

g) le compresseur (1) comporte un piston de commutation (7) destiné à l'ouverture du clapet de refoulement (2) et pouvant être actionné par la pression amenée au premier raccord de commande pneumatique (6);

h) le dispositif de régulation de pression (9) présente une entrée de commande pneumatique (9b) reliée à l'équipement à gaz comprimé du récepteur (23);

et caractérisé en ce que:

i) le compresseur (1) est pourvu d'un second raccord de commande pneumatique pour l'ouverture du clapet d'aspiration; et

j) le second raccord de commande pneumatique du compresseur (1) est relié à une seconde sortie de commande pneumatique (10) du dispositif de régulation de pression (9).

2. Dispositif selon la revendication 1, caractérisé en ce que le dispositif de régulation de pression (9) est formé d'une valve de commutation (9) pouvant être commandée en fonction de la pression du gaz comprimé amené au récepteur (23), par laquelle le premier raccord de commande pneumatique (6) peut être relié à l'équipement à gas comprimé du récepteur (réservoir 23) en vue de l'ouverture du clapet de refoulement (2), et par laquelle le second raccord de commande peut être relié à cet équipement en vue de l'overture du clapet d'aspiration du compresseur (1).

3. Dispositif selon les revendications 1 et 2, caractérisé en ce qu'une sortie de commande pneumatique commune du dispositif de régulation de pression (9) est prévue pour la première de la seconde sortie de commande pneumatique (11 et 10) de ce dispositif de régulation (9).

4. Dispositif selon les revendications 1, 2 et 3, caractérisé en ce que:

a) le compresseur (1) présente une plaque d'appui de clapet (13) réalisée pour qu'au moins une partie (17) de cette plaque, supportant la lamelle du clapet de refoulement (2), soit déplaçable dans le sens de l'ouverture de la lamelle, de manière qu'une ouverture plus grande que l'orifice découvert par la lamelle puisse être dégagée pour le gaz comprimé; et

b) le piston de commutation (7), prévu pour l'ouverture du clapet de refoulement (2), est agencé de manière qu'il serve au déplacement de la partie mobile (17) de la plaque d'appui (13).

## Claims

1. Installation for the production of compressed gas, especially for a compressed-air braking system, comprising the following features:

a) there is provided a compressor (1) which has a compression chamber (12) and draws in the gas to be compressed via a suction valve, and has a compressed-gas outlet (1a);

b) the compression chamber (12) of the compressor (1) is connected to the compressed-gas outlet (1a) via a delivery valve (2);

c) the compressed-gas outlet (1a) is connected via a pressure line (3, (3a) to a consuming device, especially one that is in the form of a storage container (23);

d) there is provided a pressure-regulating device (9) which switches the compressor (1) from a delivery phase to an idle phase when a predetermined pressure is reached;

e) the compressor (1) is provided with a first pneumatic control connection (6) for opening the delivery valve (2);

f) the first pneumatic control connection (6) of the compressor (1) is connected to a first pneumatic control outlet (11) of the pressure-regulating device (9);

g) for opening the delivery valve (2) there is provided in the compressor (1) a control piston (7) that can be operated by means of the pressure supplied to the first pneumatic control connection (6);

h) the pressure-regulating device (9) has a pneumatic control inlet (9b) which is connected to the compressed-gas system of the consuming device (23);

characterised by the following features:

i) the compressor (1) is provided with a second pneumatic control connection for opening the suction valve;

j) the second pneumatic control connection of the compressor (1) is connected to a second pneumatic control outlet (10) of the pressure-regulating device (9).

2. Installation according to claim 1, characterised in that the pressure-regulating device (9) comprises a changeover valve (9) that can be controlled in dependence on the pressure of the compressed gas supplied to the consuming device (23) and through which the first pneumatic control connection (6) for opening the delivery valve (2) and the second control connection for opening the suction valve of the compressor (1) can be connected to the compressed-gas system of the consuming device (storage container 23).

3. Installation according to claims 1 and 2, characterised in that a common pneumatic control outlet of the pressure-regulating device (9) is provided for the first and second pneumatic control outlets (11 and 10) of the pressure-regulating device (9).

4. Installation according to claims 1, 2 and 3, characterised by the following features:

a) the compressor (1) has a valve carrier plate (13) which is constructed in such a manner that at least a portion (17) of the area of the valve carrier plate (13) supporting the pressure plate of the delivery valve (2) can be moved in the opening direction of the pressure plate so that there can be freed an opening for the compressed gas that is larger than in the valve opening freed by the pressure plate;

b) the operating piston (7) provided for opening the delivery valve (2) is arranged in such a manner that it serves to move the movable portion (17) of the valve carrier plate (13).

Fig 1

EP 0 075 097 B2

EP  0 075 097  B2

# Fig 2

Fig. 3

A—A

Fig. 4